# EUROPÄISCHE PATENTSCHRIFT

(11) **EP 0 715 106 B1**
(45) Veröffentlichungstag und Bekanntmachung des Hinweises auf die Patenterteilung: **12.05.1999**
(21) Anmeldenummer: 95118710.3
(22) Anmeldetag: 28.11.1995
(51) Int. Cl.: F16K 31/04

(54) **Vorrichtung zur Betätigung von Armaturen**
Valve actuating device
Dispositif de commande pour robinetterie

(30) Priorität: 30.11.1994 DE 9419163 U
(43) Veröffentlichungstag der Anmeldung: 05.06.1996
(73) Patentinhaber: Technischer Apparatebau J. + B. Roloff GmbH, 22459 Hamburg (DE)
(72) Erfinder: Fischer, Dierk, D-20251 Hamburg (DE)
(74) Vertreter: Patentanwälte Hauck, Graalfs, Wehnert, Döring, Siemons

(56) Entgegenhaltungen:
- DE-A- 2 406 176
- DE-A- 2 711 178
- DE-B- 2 123 677
- US-A- 3 515 250

## Beschreibung

Die Erfindung bezieht sich auf eine Vorrichtung zur Betätigung von Armaturen nach dem Oberbegriff des Anspruchs 1.

Es ist bekannt, Armaturen, wie Kugelhähne, Drehschieber und ähnliche Fluide schaltende oder drosselnde Vorrichtungen mit Hilfe eines Kraftgliedes zu betätigen. Für die Betätigung werden Elektro-, Hydraulik- oder Pneumatikantriebe verwendet. Mit Hilfe derartiger Servoantriebe ist es möglich, hohe Kräfte aufzubringen, die häufig für das Losbrechen erforderlich sind. Servoantriebe haben außerdem den Vorteil, daß sie ferngesteuert betätigt werden können.

Es ist ferner bekannt, zwischen dem Servo- bzw. Verstellantrieb für eine Armatur und der Verstellwelle der Armatur eine Kupplung zu schalten, die ihrerseits betätigt werden muß. Zu ihrer Betätigung kann wiederum auf eine elektromagnetische, hydraulische oder pneumatische Kraft zurückgegriffen werden. Um die Kupplungsteile sicher voneinander zu trennen, ist auch bekannt, zwischen den Kupplungsteilen eine Feder wirken zu lassen, die bei Abschalten der Kupplungskraft die Kupplungsteile trennt. Die Feder erhöht jedoch den Energieaufwand für die Betätigung der Kupplung und erfordert mithin eine aufwendigere Betätigungsvorrichtung, weil sie für die Herstellung der Kupplungsverbindung überwunden werden muß. In Fällen, in denen außerdem eine Feder vorgesehen ist, um die Schaltwelle der Armatur zur Verstellung in Schließrichtung zu betätigen, wenn die Energieversorgung der Kupplungsbetätigung ausfällt, ist die Kupplungsrückstellfeder mit einer noch größeren Federkraft auszulegen, damit der verstärkte Krafteingriff zwischen den Kupplungsteilen überwunden wird.

Der Erfindung liegt die Aufgabe zugrunde, eine Vorrichtung zur Betätigung von Armaturen zu schaffen, deren Kupplung ohne Kupplungsrückstellfeder ausgestattet ist und sicherstellt, daß bei Ausfall der Energieversorgung für die Kupplungsbetätigung die Kupplungsteile trotz einer Rückstellfeder für die Verstellwelle der Armatur sicher getrennt werden.

Diese Aufgabe wird durch die Merkmale des Anspruchs 1 gelöst.

Bei der Erfindung findet die Drehmomentübertragung zwischen den Kupplungsteilen über schräg zur Drehachse angeordnete Flächen der Kupplungsteile statt derart, daß die Kupplungsteile durch die Rückstellkraft der Rückstellvorrichtung axial auseinanderbewegt werden, wenn die Betätigungsvorrichtung inaktiviert ist. Bei der Erfindung braucht die Betätigungskraft, mit der die Kupplungsteile miteinander in Eingriff gebracht werden, nur relativ gering sein. Sie reicht aus, den Eingriff auch dann aufrechtzuerhalten, wenn das Drehmoment über Schrägflächen übertragen wird. Die Schrägflächen erzeugen zwar bei Verdrehung der Verstellwelle mit Hilfe des Kraftgliedes eine Kraftkomponente in axialer Richtung im Sinne einer Trennung der Kupplungsteile, diese kann jedoch von der Betätigungsvorrichtung für die Kupplung ohne weiteres überwunden werden, insbesondere wenn der Winkel, den die Schrägflächen gegenüber der Drehachse einnehmen, relativ klein ist. Fällt indessen die Kupplungskraft fort, weil die Energieversorgung für die Betätigungsvorrichtung unterbrochen oder abgeschaltet ist, reicht die Drehkraft der Rückstellvorrichtung, die an den mit der Schaltwelle der Armatur verbundenen Kupplungsteil angreift, aus, eine axiale Kraftkomponente zu erzeugen im Sinne einer Trennung des axialbeweglichen Kupplungsteils vom axial feststehenden. Auch eine gewisse Reibung, die zwischen den Schrägflächen zwangsläufig vorhanden ist, kann auf diese Weise leicht überwunden werden.

Mithin ist mit der Erfindung eine Kupplung geschaffen, die völlig ohne Kupplungsfeder auskommen kann und die gleichwohl sicherstellt, daß bei Unterbrechung der Energiezufuhr zur Betätigungsvorrichtung eine Trennung der Kupplungsteile mit Sicherheit erfolgt. Die Betätigungsvorrichtung kann entsprechend klein dimensioniert werden.

Der Aufwand, der bei der erfindungsgemäßen Kupplung erforderlich ist, ist nur geringfügig höher als bei einer Kupplung konventioneller Art.

Nach einer Ausgestaltung der Erfindung weist das axialbewegliche Kupplungsteil mehrere zylindrische Führungselemente auf, die in zylindrischen Führungsbohrungen eines Lagerbauteils geführt sind. Die zylindrischen Führungselemente ermöglichen eine reibungsarme axiale Führung des axialbeweglichen Kupplungsteils und ermöglichen andererseits die Übertragung eines ausreichend großen Drehmoments, um die Verstellwelle der Armatur zu betätigen.

Die Betätigungsvorrichtung kann pneumatisch oder hydraulisch betrieben sein. Eine Ausgestaltung der Erfindung sieht vor, daß die Betägigungsvorrichtung einen Elektromagneten aufweist, der von einem Kupplungsring umgeben ist, wobei der Kupplungsring erhabene Abschnitte aufweist, die an den Enden die Schrägflächen aufweisen, und eine axialbewegliche Kupplungsscheibe vorgesehen ist, die segmentartige Ausnehmungen aufweist, deren Enden mit komplementären Schrägflächen versehen sind. Der Kupplungsring kann Bestandteil des Joches des Elektromagneten sein, und die Kupplungsscheibe der Anker des Magneten, wobei die erhabenen Abschnitte in die segmentartigen Ausnehmungen einrasten, wenn der Kupplungsring zusammen mit dem Magneten gedreht wird. Alternativ kann der Kupplungsring auch aus einem nicht magnetischen Material bestehen, das mit einem nicht magnetischen Gehäuse für den Elektromagneten verbunden wird, beispielsweise durch eine geeignete Verschraubung. Der Winkel, der von den Schrägflächen gegenüber der Drehachse der Kupplung beschrieben wird, ist je nach den auftretenden Kräften zu wählen und auch von der Reibung zwischen den Schrägflächen abhängig. Er bewegt sich vorzugsweise zwischen 1 und 45°.

Die Erfindung wird nachfolgend anhand von Zeichnungen näher erläutert.
- Fig. 1: zeigt schematisch einen Schnitt durch eine Kupplung nach der Erfindung.
- Fig. 2: zeigt einen Schnitt durch eine Kupplung ähnlich der nach Fig. 1.
- Fig. 3: zeigt eine Draufsicht auf einen Kupplungsring der Kupplung nach Fig. 2.
- Fig. 4: zeigt eine Draufsicht auf eine Kupplungsscheibe der Kupplung nach Fig. 2.
- Fig. 5: zeigt einen Schnitt durch einen Teil von Kupplungsring und Kupplungsscheibe im Eingriff miteinander.

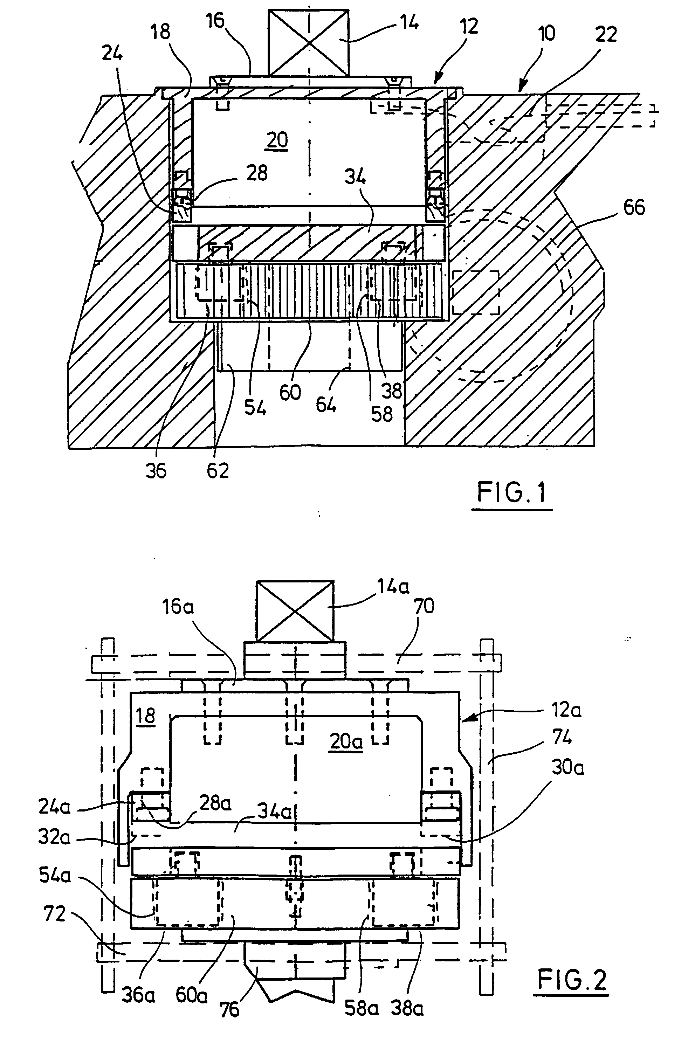

In Fig. 1 ist ein Gehäuse 10 dargestellt, das auf einer nicht gezeigten Armatur, beispielsweise einem Kugelhahn, aufgesetzt wird. Es lagert eine Kupplung 12, die auf noch zu beschreibende Weise mit der nicht gezeigten Stellwelle der Armatur verbindbar ist und die ihrerseits verbindbar ist mit einem Kraftglied, beispielsweise einem Elektroantrieb oder einem pneumatischen oder hydraulischen Antrieb zur Betätigung der Stellwelle. Zu diesem Zweck weist die Kupplung 12 einen Vierkant 14 auf, der auf einer Platte 16 sitzt, die mit einem glockenartigen Gehäuse 18 verschraubt ist, das in seinem Inneren einen im einzelnen nicht dargestellten Elektromagneten 20 aufnimmt. Der Elektromagnet 20 wird über ein gestrichelt dargestelltes Kabel 22, das durch das Gehäuse 10 hindurchgeführt ist, mit Energie versorgt.

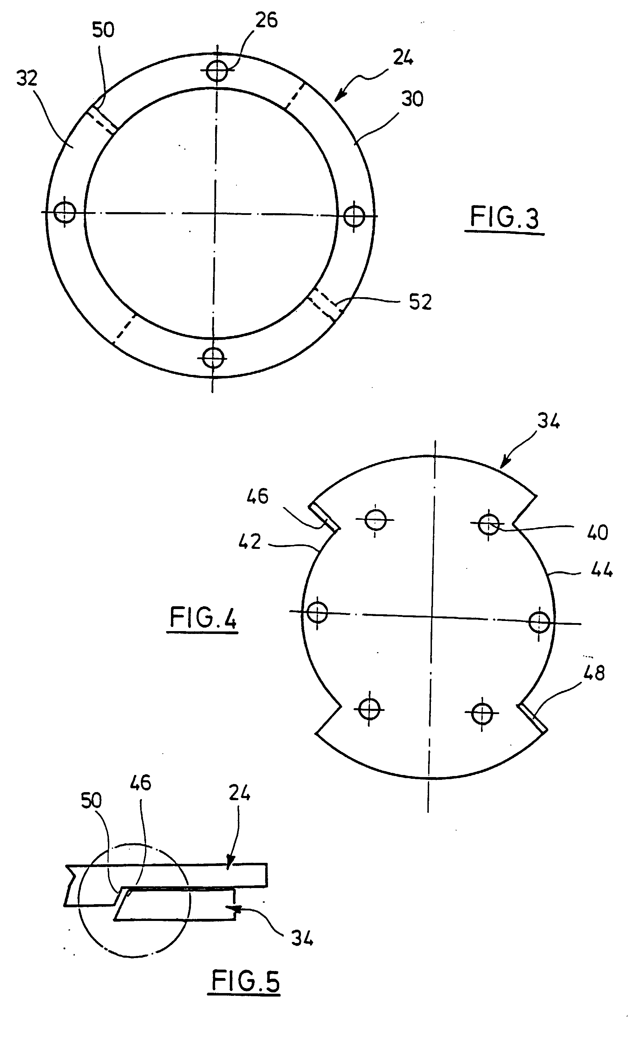

Mit dem glockenartigen Gehäuse 18 ist an der Unterseite ein Kupplungsring 24 verschraubt, der in einer Weise ausgebildet ist, wie in Fig. 3 dargestellt. Er weist vier im 90°-Abstand angeordnete Bohrungen 26 auf zur Befestigung am Gehäuse 18 mittels Schrauben 28. Der Ring 24 hat diametral gegenüberliegend erhabene Abschnitte 30, 32, welche in Fig. 1 nach unten weisen.

Eine Kupplungsscheibe 34 befindet sich unterhalb des Kupplungsringes 24. Mit der Kupplungsscheibe 34 sind sechs zylindrische Führungszapfen verbunden, von denen in Fig. 1 zwei bei 36 bzw. 38 angedeutet sind. Die zylindrischen Führungszapfen 36 sind mit im Durchmesser kleineren Gewindeabschnitten in entsprechenden Gewindebohrungen der Kupplungsscheibe 34 verschraubt. Die Kupplungsscheibe 34 geht auch aus der Darstellung nach Fig. 4 hervor. Die Gewindebohrungen sind dort mit 40 bezeichnet. Man erkennt, daß die Kupplungsscheibe 34 auf gegenüberliegenden Seiten segmentförmige Ausnehmungen 42, 44 aufweist, die an den Enden Schrägflächen aufweisen, wie bei 46 bzw. 48 erkennbar. Diesen Schrägflächen 46, 48, die etwa in einem Winkel von 15° zur Drehachse der Kupplung 12 verlaufen, entsprechen komplementäre Schrägflächen des Kupplungsringes 24, wie gestrichelt bei 50 bzw. 52 angedeutet. Es sei noch erwähnt, daß die Bogenlänge der erhabenen Abschnitte 32, 30 minimal geringer ist als die Bogenlänge der Ausschnitte 42, 44. In Fig. 5 ist das Zusammenwirken von Kupplungsring 24 und Kupplungsscheibe 34 dargestellt. Die Kraft des Kupplungsringes wird auf die Kupplungsscheibe 34 über jeweils zwei Schrägflächenpaare 46, 50 bzw. 48, 52 übertragen.

Die Führungszapfen 36, 38 sitzen in entsprechenden Führungsbohrungen, die bei 54 bzw. 58 angedeutet sind. Die Führungsbohrungen 54, 58 sind in einem Lagerbauteil 60 vorgesehen, das mit einem Zahnrad 62 fest verbunden ist, das seinerseits eine zentrale Bohrung 64 aufweist zur Aufnahme der Stellwelle der nicht gezeigten Armatur.

Bei 66 ist eine Rückstellvorrichtung mit einer nicht gezeigten Feder angedeutet, die über ein mit dem Zahnrad 62 kämmendes Zahnrad in Eingriff steht.

Die beschriebene Kupplung 12 arbeitet wie folgt. In Fig. 1 ist der getrennte Zustand der Kupplung dargestellt. Wird mit Hilfe eines Stellantriebs, beispielsweise eines Elektroantriebs, ein Drehmoment auf den Zapfen 14 ausgeübt, dreht sich zwar das Gehäuse 18 mit dem Ring 24, eine Kraftübertragung findet indessen nicht statt. Dies ist erst dann der Fall, wenn der Elektromagnet 20 erregt wird. Die Elektromagnetkraft zieht die Kupplungsscheibe 34 gegen den Ring 24, also in Fig. 1 nach oben, so daß der beschriebene Krafteingriff zwischen Kupplungsring 24 und Kupplungsscheibe 34 zustande kommt. Der Verstellantrieb überträgt nun zum Beispiel eine 90°-Drehung auf die nicht gezeigte Armatur. Gleichzeitig wird dadurch die Feder der Rückstellvorrichtung 66 gespannt. Wird nun die Stromzufuhr zum Elektromagneten 20 unterbrochen, könnte die Scheibe 34 durch Schwerkraft herunterfallen. Die Rückstellfeder der Rückstellvorrichtung 66 hält jedoch der Kraftschluß der Scheibe am Kupplungsring 24 aufrecht. Infolge der schrägen Kupplungsflächen wird jedoch die Scheibe 34 automatisch nach unten verstellt, so daß der Krafteingriff zwischen den Kupplungsteilen unterbrochen ist, wodurch die Rückstellvorrichtung 66 die Armatur in die Schließstellung zurückverstellen kann.

In Fig. 2 sind mit Fig. 1 gleiche Teile mit gleichen Bezugszeichen versehen, denen lediglich ein "a" hinzugefügt ist.

In Fig. 2 ist das Kupplungsgehäuse 12a zwischen Lagerschilden 70, 72, die über Bolzen 74 miteinander verbunden sind, gehalten. Die Anordnung ist in nicht näher dargestellter Weise auf dem Gehäuse einer Armatur angeordnet. Die Rückstellvorrichtung, die in geeigneter Weise am Lagerbauteil 60a oder an einem Zapfen 76 angreift, der mit der Verstellwelle der nicht gezeigten Armatur zusammenwirkt, ist nicht gezeigt. Man erkennt im übrigen aus Fig. 2, daß das glockenartige Gehäuse 12a die Kupplungsscheibe 34a übergreift.

## Patentansprüche

1. Vorrichtung zur Betätigung von Armaturen, bei der zwischen einem Kraftglied und einer Verstellwelle der Armatur eine Kupplung angeordnet ist, die ein axial festes Kupplungsteil (24,24a) und ein axialbewegliches Kupplungsteil (34,34a) aufweist, die von einer Betätigungsvorrichtung (20,20a) in Eingriff bringbar sind und bei der eine Rückstellvorrichtung (66) auf das mit der Verstellwelle in Eingriff stehende Kupplungsteil wirkt und auf die Verstellwelle eine Kraft in Schließrichtung ausübt, dadurch gekennzeichnet, daß die Drehmomentübertragung zwischen den Kupplungsteilen (24, 34, 24a, 34a) über schräg zur Drehachse angeordnete Flächen (50, 46, 52, 48) erfolgt derart, daß die Kupplungsteile (24, 34, 24a, 34a) durch die Rückstellkraft der Rückstellvorrichtung (66) axial auseinanderbewegt werden, wenn die Betätigungsvorrichtung (20, 20a) inaktiviert ist.

2. Vorrichtung nach Anspruch 1, dadurch gekennzeichnet, daß das axialbewegliche Kupplungsteil (34,34a) mehrere zylindrische Führungselemente (36, 38, 36a, 38a) aufweist, die in zylindrischen Führungsbohrungen (54, 58, 54a, 58a) eines Lagerbauteils (60, 60a) geführt sind.

3. Vorrichtung nach Anspruch 1 oder 2, dadurch gekennzeichnet, daß die Betätigungsvorrichtung einen Elektromagneten (20, 20a) aufweist, der von einem, das axial feste Kupplungsteil bildenden Kreisring (24, 24a) umgeben ist, wobei der Kreisring (24) erhabene Abschnitte (30, 32) aufweist, die an den Enden die Schrägflächen (50, 52) aufweisen und als axialbewegliches Kupplungsteil eine Kupplungsscheibe (34, 34a) vorgesehen ist, die segmentartige Ausnehmungen (42, 44) aufweist, deren Enden mit komplementären Schrägflächen (46, 48) versehen sind.

4. Vorrichtung nach einem der Ansprüche 1 bis 3, dadurch gekennzeichnet, daß der Winkel der Schrägflächen (50, 52, 46, 48) gegenüber der Drehachse der Kupplung zwischen 1 und 45° liegt.

## Claims

1. A device for actuating fittings with which between a force member and an adjusting shaft of the fitting there is arranged a coupling which comprises an axially rigid coupling part (24, 24a) and an axially movable coupling part (34, 34a), which can be brought into engagement by an actuating device (20, 20a) and with which a restoring device (66) acts on the coupling part in engagement with the adjusting shaft and exerts a force onto the adjusting shaft in the closure direction, characterised in that the torque transmission between the coupling parts (24, 34, 24a, 34a) is effected via surfaces (50, 46, 52, 48) arranged obliquely to the rotational axis in a manner such that the coupling parts (24, 34, 24a, 34a) by way of the restoring force of the restoring device (66) are moved axially apart when the actuating device (20, 20a) is inactivated.

2. A device according to claim 1, characterised in that the axially movable coupling part (34, 34a) comprises several cylindrical guide elements (36, 38, 36a, 38a) which are guided in cylindrical guide bores (54, 58, 54a, 58a) of a bearing component (60, 60a).

3. A device according to claim 1 or 2, characterised in that the actuating device comprises an electromagnet (20, 20a) which is surrounded by a circular ring (24, 24a) forming the axially rigid coupling part, wherein the annular ring (24) comprises raised sections (30, 32) which at the ends comprise the oblique surfaces (50, 52) and as an axially movable coupling part a coupling disk (34, 34a) is provided which comprises segment-like recesses (42, 44) whose ends are provided with complementary oblique surfaces (46, 48).

4. A device according to one of claims 1 to 3, charactersied in that the angle of the oblique surfaces (50, 52, 46, 48) with respect to the rotational axis of the coupling lies between 1 and 45°.

## Revendications

1. Dispositif de commande d'un appareil de robinetterie dans lequel un coupleur est disposé entre un élément d'entraînement et un arbre de réglage de l'appareil de robinetterie, ce coupleur présentant un élément de coupleur (24, 24a) fixe axialement et un élément de coupleur (34, 34a) mobile axialement, qui peuvent être mis en prise par un dispositif d'actionnement (20, 20a), et dans lequel un dispositif de rappel (66) agit sur l'élément de coupleur qui est en prise avec l'arbre de réglage et qui exerce sur cet arbre de réglage une force dans le sens de la fermeture, caractérisé en ce que la transmission du couple de rotation entre les éléments de coupleur (24, 34, 24a, 34a) est réalisée par l'intermédiaire de surfaces (50, 46, 52, 48) disposées obliquement par rapport à l'axe de rotation, de telle façon que ces éléments de coupleur (24, 34, 24a, 34a) soient éloignés axialement l'un de l'autre par la force de rappel du dispositif de rappel (66), lorsque le dispositif d'actionnement n'est pas activé (20, 20a).

2. Dispositif suivant la revendication 1, caractérisé en ce que l'élément de coupleur (34, 34a) mobile axialement présente plusieurs éléments de guidage cylindriques (36, 38, 36a, 38a) qui sont guidés dans des trous de guidage cylindriques (54, 58, 54a, 58a) d'une pièce de palier (60, 60a).

3. Dispositif suivant la revendication 1 ou la revendication 2, caractérisé en ce que le dispositif d'actionnement présente un électro-aimant (20, 20a) entouré par une bague circulaire (24, 24a) formant l'élément de coupleur fixe axialement, cette bague circulaire (24) présentant des organes en saillie (30, 32) comprenant à leurs extrémités les surfaces obliques (50, 52) et en ce qu'en tant qu'élément de coupleur mobile axialement est prévu un disque de couplage (34, 34a) qui comporte des évidements en forme de segment (42, 44) dont les extrémités sont munies de surfaces obliques complémentaires (46, 48).

4. Dispositif suivant l'une des revendications 1 à 3, caractérisé en ce que l'angle des surfaces obliques (50, 52, 46, 48) est situé entre 1° et 45° par rapport à l'axe de rotation du coupleur.
